# EUROPÄISCHE PATENTSCHRIFT

(11) **EP 1 144 226 B1**
(45) Veröffentlichungstag und Bekanntmachung des Hinweises auf die Patenterteilung: **07.07.2004**
(21) Anmeldenummer: 00910501.6
(22) Anmeldetag: 21.01.2000
(51) Int. Cl.: B60R 21/20

(54) **AIRBAGMODUL**
AIRBAG MODULE
MODULE D'AIRBAG

(30) Priorität: 28.01.1999 DE 19905025
(43) Veröffentlichungstag der Anmeldung: 17.10.2001
(60) Teilanmeldung: 01250405.6
(73) Patentinhaber: Takata-Petri AG, 63743 Aschaffenburg (DE)
(72) Erfinder: ADOMEIT, Heinz-Dieter, D-10623 Berlin (DE); HAASE, Carsten, D-33739 Bielefeld (DE)
(74) Vertreter: Baumgärtel, Gunnar, Dr.
(86) Internationale Anmeldenummer: PCT/DE2000/000226
(87) Internationale Veröffentlichungsnummer: WO 2000/044592

(56) Entgegenhaltungen:
- EP-A- 0 622 276
- EP-A- 0 681 946
- EP-A- 0 832 791
- DE-U- 9 101 099
- US-A- 4 004 827
- US-A- 5 560 648
- US-A- 5 642 900
- US-A- 5 779 261
- PATENT ABSTRACTS OF JAPAN vol. 016, no. 129 (M-1228), 2. April 1992 (1992-04-02) & JP 03 292236 A (ASAHI CHEM IND CO LTD), 24. Dezember 1991 (1991-12-24)

## Beschreibung

Die Erfindung betrifft ein Airbagmodul nach dem Oberbegriff des Patentanspruchs 1.

Airbagmodule dienen dem Schutz von Kraftfahrzeuginsassen im Crashfall, indem ein Gassack innerhalb kurzer Zeit zwischen einem Kraftfahrzeugteil, wie Lenkrad, Armaturenbrett oder Seitentür, und dem Insassen durch das von einem Gasgenerator erzeugte oder freigesetzte Gas aufgeblasen wird.

Üblicherweise umfaßt ein Airbagmodul neben dem Gassack und dem Gasgenerator eine Anzahl weiterer Bauteile, insbesondere ein Gehäuse, in das der Gassack gefaltet wird, eine Abdeckung für das Gehäuse und einen Generatorträger, auf dem der Gasgenerator befestigt ist. Die Befestigung des Gassackes erfordert in der Regel noch zusätzliche Bauteile, wie z.B. einen Haltering.

So ist aus der US-PS 5,797,622 ein Lenkrad bekannt, an dem ein zweiteiliges Gehäuse für ein Airbagmodul angeordnet ist, das ein einstückig an dem Lenkrad angeformtes Gehäuseunterteil und ein als Abdeckung dienendes Gehäuseoberteil umfaßt, wobei an dem Gehäuseoberteil eine hohlzylindrische Halterung befestigt ist, in der ein zylindrisch ausgebildete Gasgenerator gelagert ist und auf deren äußere Oberfläche der gefaltete Gassack gelegt ist.

Aus der EP 0 622 276 A1 ist eine Gassack-Rückhaltesystem für Fahrzeuge bekannt, bei dem der Gassack an einer Verankerungsplatte vormontierbar befestigt und zusammen mit der Verankerungsplatte in den Innenraum einer Abdeckung des Rückhaltesystems eingelegt ist. Der Abdeckung ist als Unterteil ein Generatorträger in Form einer Tragplatte zugeordnet, auf der ein Gasgenerator angebracht ist.

Zur Einsparung von Kosten und vor allem zur Vereinfachung der Montage des Airbagmoduls und seiner Befestigung an einem Teil des Kraftfahrzeuges wurde bereits vorgeschlagen, die Anzahl der Einzelteile eines Airbagmoduls zu reduzieren.

In der EP 0 832 791 A2 ist ein Gassack-Modul für ein Fahrzeuginsassen-Rückhaltesystem mit einem Gassack, einem Gasgenerator und Montageschrauben beschrieben, bei dem die Montageschrauben einen von dem Gassack-Modul wegragenden Befestigungsfortsatz zur Befestigung des Gassack-Moduls an einem Fahrzeugteil aufweisen. In einer Ausführungsform sind die Schrauben mit einem Anlagekopf versehen, wobei zwischen dem Anlagekopf und einer auf den Schaft der Montageschraube aufgeschraubten Mutter die Berandung der Einblasöffnung des Gassackes eingespannt ist. Ferner sind ein Haltering im Inneren des Gassackes und eine Montageplatte für den Gasgenerator vorgesehen, zwischen denen die Berandung aufgenommen ist. Als Gehäuse dient bei diesem Modul eine Abdeckung, die entsprechend gestaltete Seitenwände und Befestigungsmittel für Schrauben aufweist.

Damit wird zwar eine Reduzierung der Teilezahl erreicht; zur sicheren Befestigung des Gassackes an dem Gasgenerator sind aber auch bei diesem Airbagmodul neben der als Gehäuse ausgebildeten Abdeckung weitere Gehäuseteile, nämlich eine Montageplatte an dem Gasgenerator und ein Haltering erforderlich.

Aus der US-PS 5,560,648 ist ein Fahrerairbagmodul mit einem eine Abdeckung bildenden Gehäuse bekannt, in dem ein Gassack und ein an einem Generatorträger befestigter Gasgenerator angeordnet sind.

Der vorliegenden Erfindung liegt die Aufgabe zugrunde, ein Airbagmodul bereitzustellen, bei dem die Anzahl der Teile weiter reduziert ist und das einfach an einem Fahrzeugteil befestigbar ist.

Diese Aufgabe wird durch ein Airbagmodul mit den Merkmalen des Anspruchs 1 gelöst.

Bei einem Airbagmodul mit einem Gassack, einem Gasgenerator und einer Abdeckung, wobei die Abdeckung als Gehäuse des Airbagmoduls ausgeführt ist, ist erfindungsgemäß der Gasgeneratorträger einstückig mit dem Gehäuse ausgebildet und schwenkbar an dem Gehäuse angelenkt.

Unter einer als Gehäuse ausgebildeten Abdeckung wird dabei eine Abdeckung verstanden, die einstückig geformt ist und die den Gasgenerator sowie den Gassack umschließt, insbesondere den Gassack und den Gasgenerator mit ihren Seitenwänden auf allen Seiten umgibt, so daß keine zusätzlichen Gehäuseteile erforderlich sind, um den Gassack und den Gasgenerator aufzunehmen und zu umschließen. Dabei können in den Seitenwänden der Abdeckung aber selbstverständlich Öffnungen vorgesehen sein, z.B. um dem in der Abdeckung angeordnetem Gasgenerator ein Zündkabel zuzuführen oder um aus anderen Gründen von außen her einen Zugang zum Inneren der Abdeckung zu schaffen.

Einen einstückigen Bestandteil einer solchen Abdeckung bildet erfindungsgemäß auch der Träger des Gasgenerators, d.h. der Gasgeneratorträger ist einstückig an der Abdeckung angeformt und ist ein Element des den Gassack und den Gasgenerator umgebenden einteiligen Gehäuses.

Diese Anordnung erweist sich insbesondere bei Fahrerairbagmodulen, die zur Montage in einem Lenkrad vorgesehen sind, als günstig.

Vorzugsweise ist der Generatorträger an dem Gehäuse über ein Scharnier angelenkt.

In einer bevorzugten Ausführungsform wird der Generatorträger von mindestens einer klappbaren Lasche gebildet, die ein Öffnen und Schließen des Gehäuses ermöglicht. Insbesondere sind zwei, drei oder vier Laschen vorgesehen. Insbesondere liegt der Gasgenerator zumindest teilweise auf der/den Lasche(n) auf.

Es ist zweckmäßig, daß das Gehäuse aus Kunststoff besteht, wobei als Scharnier ein Filmscharnier vorgesehen ist. Die Herstellung kann dabei vorteilhaft im Spritzgußverfahren erfolgen. In einer bevorzugten Ausführungsform wird das Gehäuse in der 2- oder 3-Komponenten Technik hergestellt, so daß die Eigenschaften der Kunststoffe in einzelnen Bereichen des Gehäuses optimal anpaßbar sind. So kann die sichtbare Oberfläche beispielsweise entsprechend der Fahrzeuginnenausstattung ein Dekor aufweisen. Im Bereich des Scharniers kann ein elastischer Kunststoff eingesetzt werden.

In einer bevorzugten Ausführungsform bildet mindestens eine angespritzte Lasche den Generatorträger. Je nach Geometrie des Airbagmoduls bzw. des Fahrzeugteils, in oder an den das Modul montiert wird, können auch zwei, drei oder vier Laschen vorteilhaft sein. So bietet sich z. B. für den Einbau eines Airbagmoduls in ein Dreispeichenlenkrad ein Gehäuse mit drei Laschen an.

Es ist weiterhin vorteilhaft, daß sich bei zwei oder mehr Laschen diese gegenseitig überlappen.

Vorzugsweise sind an den Laschen und an weiteren Bereichen des Gehäuses Rastelemente vorgesehen. Die Rastelemente erlauben eine Festlegung der Laschen an dem Gehäuse (bei einer Vormontage), wodurch die Befestigung der Airbageinheit an einem Fahrzeugteil erleichtert wird.

Zweckmäßigerweise erfolgt die endgültige Festlegung der Teile der Airbageinheit zueinander gleichzeitig mit der Befestigung des Moduls an einem Fahrzeugteil. Damit erübrigen sich weitere Befestigungsteile wie etwa Nieten oder Schrauben.

Mit Vorteil weist der Gasgenerator einen Flansch zu seiner Festlegung an dem Gehäuse auf. An dem Flansch können außerdem vormontierte oder damit einteilige Befestigungsmittel vorgesehen sein, die der Befestigung des Airbagmoduls an einem Kraftfahrzeugteil dienen. Als Befestigungsmittel sind insbesondere Gewindebolzen geeignet.

Vorzugsweise ist der Gassack an dem Gasgenerator festgelegt. Dazu wird der Gassack zweckmäßigerweise zwischen den Laschen und dem Gasgenerator eingeklemmt. Es kann auch vorteilhaft sein, den Gassack um den Generatorträger, d. h. das Gehäuse, herumzulegen.

In einer besonders bevorzugten Ausführungsform weist der Gassack eine Öffnung auf, durch die der Gasgenerator in den Gassack einschiebbar ist. Es ist zweckmäßig, daß diese Öffnung schlitzförmig, insbesondere kreuzschlitzförmig ausgebildet ist. Die Öffnung kann auch als sternförmiger Schlitz ausgebildet sein.

Der Gassack kann besonders einfach an dem Gasgenerator festgelegt werden, wenn im Bereich der Öffnung zusätzliche Durchgänge vorgesehen sind, die über die Befestigungsmittel des Gasgeneratorflansches gefädelt werden. Vorzugsweise handelt es sich bei den Durchgängen um gestanzte Löcher mit einer Randverstärkung.

In einer besonders bevorzugten Ausführungsform mit einem Gasgenerator, der Befestigungsmittel aufweist, ist eine schlitzförmige Öffnung für den Gasgenerator vorgesehen, die mindestens zwei Felder an dem Gassack bildet. In jedem der durch den Schlitz gebildeten Felder ist ein Durchgang zum Einfädeln der Befestigungsmittel vorgesehen. Insbesondere bildet die schltizförmige Öffnung eine gerade Anzahl Felder.

Vorzugsweise ist eine kreuzschlitzförmige Öffnung vorgesehen, so daß vier Felder gebildet werden. Zur Montage des Airbagmoduls wird der Gasgenerator in diesem Fall in den Gassack eingebracht, und anschließend werden zu seiner Festlegung an dem Gasgenerator zunächst zwei erste benachbarte Durchgänge über die Gewindebolzen gefädelt und danach die beiden verbleibenden Durchgänge. Die von dem Schlitz gebildeten Felder überlappen sich dadurch und es wird eine Aussparung für den Anschluß eines Sensors geschaffen. Auf diese Weise wird eine besonders dichte und sichere Klemmung des Gassackes an dem Gasgenerator erreicht.

Die Befestigung des erfindungsgemäßen Airbagmoduls an einem Lenkrad erfolgt zweckmäßigerweise über die an dem Flansch des Gasgenerators vorgesehenen Befestigungsmittel. Die Verwendung von Gewindebolzen erlaubt dabei eine sehr leichte Anpassung an verschiedene Lenkradtypen. Zur Montage des Airbagmoduls sind lediglich entsprechende Bohrungen in dem Lenkradskelett oder in anderen zur Aufnahme des Airbagmoduls im Lenkrad vorgesehenen Teile (z. B. in der Kontaktbrücke beim "floating horn") vorzusehen.

Auch der Zusammenbau des Airbagmoduls selbst ist bei dem erfindungsgemäßen Airbagmodul erheblich vereinfacht. Der Gasgenerator wird in den Gassack eingebracht und der Gassack dann direkt in das von der Abdeckung gebildete Modulgehäuse gefaltet. Anschließend wird der z. B. von zwei Laschen an dem Gehäuse gebildete Generatorträger, z. B. entlang eines Filmscharniers, auf den Gasgenerator umgelegt und vorzugsweise über Rastelemente gesichert. Die endgültige Festlegung erfolgt dann bei der Montage des Airbagmoduls an einem Fahrzeugteil.

Alternativ kann der Gassack auch in einem Hilfscontainer gefaltet werden und/oder anstelle des Gasgenerators bei der Faltung ein Platzhalter vorgesehen werden.

Es ist auch möglich, bei dem erfindungsgemäßen Airbagmodul die sichtbaren Bereiche der Abdeckung mit Leder, Stoff oder Folie zu beziehen oder das Airbagmodul unter eine entsprechende Verkleidung beispielsweise des gesamten Lenkrades einzuschieben.

Die Erfindung soll anhand der beigefügten Figuren näher erläutert werden.

Es zeigen:
- Figur 1:: einen Querschnitt durch ein Lenkrad mit einem Airbagmodul;
- Figur 2:: eine Unteransicht des Airbagmoduls aus Figur 1;
- Figur 3a:: einen Querschnitt durch eine Abwandlung des Airbagmoduls aus Figur 1 und 2;
- Figur 3b:: eine Unteransicht des Airbagmoduls aus Figur 3a;
- Figur 4a:: einen Querschnitt durch ein Airbagmodul für ein Vierspeichenlenkrad;
- Figur 4b:: eine Unteransicht des Airbagmoduls aus Figur 4a;
- Figur 5a:: einen Querschnitt durch ein weiteres Airbagmodul für ein Vierspeichenlankrad;
- Figur 5b:: eine Unteransicht des Airbagmoduls aus Figur 5a;
- Figur 6:: eine Unteransicht eines Airbagmoduls für ein Dreispeichenlenkrad;
- Figur 7:: eine Unteransicht eines drei Laschen aufweisenden Airbagmoduls für ein Dreispeichenlenkrad;
- Figur 8:: eine Unteransicht eines zwei überlappende Laschen aufweisenden Airbagmoduls;
- Figur 9:: einen Gassack für ein erfindungsgemäßes Airbagmodul mit einer schlitzförmigen Öffnung, wobei in den Gassack ein Gasgenerator eingeführt ist;
- Figur 10a:: einen Gassack mit einer kreuzschlitzförmigen Öffnung, durch die vier Felder in dem Gassack gebildet werden, wobei in den Gassack ein Gasgenerator eingeführt ist;
- Figur 10b:: den Gassack aus Figur 10a, bei dem die ersten beiden Felder über Gewindebolzen eingefädelt sind;
- Figur 10c:: den Gassack aus den Figuren 10a und 10b, bei dem die weiteren beiden Felder ebenfalls über die Gewindebolzen eingefädelt sind.

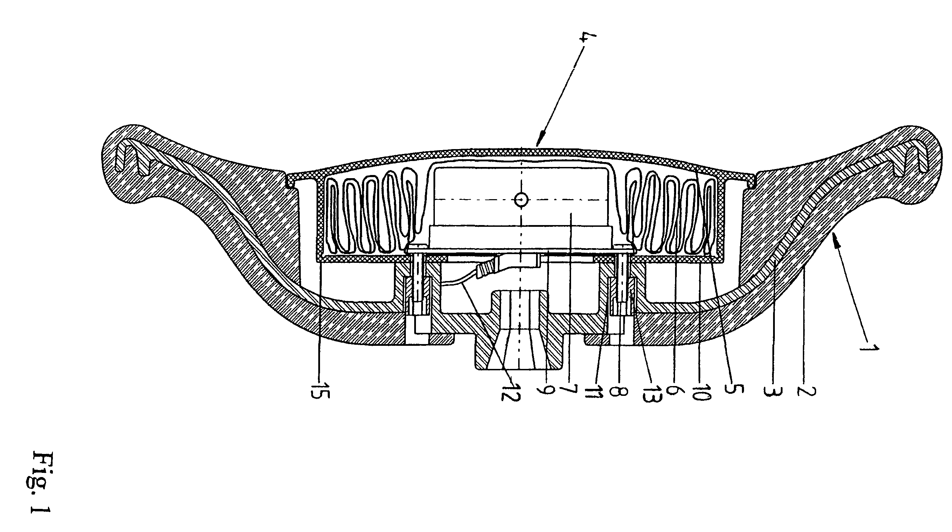

In Figur 1 ist ein Lenkrad 1 mit einem Lenkradkranz 2 und einer Lenkradnabe 3 gezeigt, in das ein Airbagmodul 4 integriert ist. Das Airbagmodul 4 umfaßt eine Abdeckung 5, einen Gassack 6 und einen Gasgenerator 7. Die einteilige (d.h. einstückig geformte) Abdeckung 5 bildet sowohl das Gehäuse des Airbagmoduls als auch einen Generatorträger für den Gasgenerator 7 und umschließt sowohl den den Gassack 6 als auch Gasgenerator 7.

An dem Gasgenerator 7 ist ein Flansch 9 mit Befestigungsmitteln 8 vorgesehen. Als Befestigungsmittel 8 dienen Gewindebolzen, mittels derer einerseits der Gasgenerator 7 an dem Generatorträger 10 als Teil des Gehäuses, d. h. der Abdeckung 5, festgelegt ist und andererseits das Airbagmodul 4 an der Lenkradnabe 3 montiert ist. Dazu sind in der Lenkradnabe 3 Bohrungen 11 vorgesehen, in die die Gewindebolzen 8 eingreifen und in denen sie durch Muttern 13 gehalten werden.

Weiterhin ist ein Zündkabel 12 erkennbar, über den der Gasgenerator 7 der Airbageinheit 4 gezündet wird. Das Zündkabel 12 ist über einen Anschlußstecker an den Gasgenerator 7 angeschlossen.

Sowohl die Montage der Airbageinheit 4 selbst als auch deren Befestigung an dem Lenkrad 1 sind durch die einteilige Ausbildung ihres Gehäuses (einschließlich Abdeckung und Generatorträger) und die dadurch erreichte Reduzierung der Teileanzahl erheblich vereinfacht. So besteht das Airbagmodul 4 nur aus den drei Teilen Abdeckung 5, Gassack 6 und Gasgenerator 7. Der Flansch 9 und die Befestigungsmittel (Gewindebolzen 8) sind bevorzugt einstückig mit dem Gasgenerator 7 ausgeführt oder zumindest an diesem vormontiert. Das Modul 4 kann damit sehr einfach vorgefertigt werden.

Die Montage der Airbageinheit 4 erfolgt sehr einfach, indem der Gassack 6 über den Gasgenerator 7 gestülpt und an diesem festgelegt wird, der Gassack 6 in an sich bekannter Weise in das von der Abdeckung 5 gebildete Gehäuse gefaltet wird und der untere Bereich 10 der Abdeckung 5 als Generatorträger auf den Gasgenerator 7 geklappt wird.

Zur Befestigung an dem Lenkrad 1 werden die Gewindebolzen 8 in die Bohrungen 11 gesteckt und mit den Muttern 13 verschraubt. Das Zündkabel 12 weist in der Regel einen Stecker auf und wird über diesen an das Airbagmodul 4 angeschlossen.

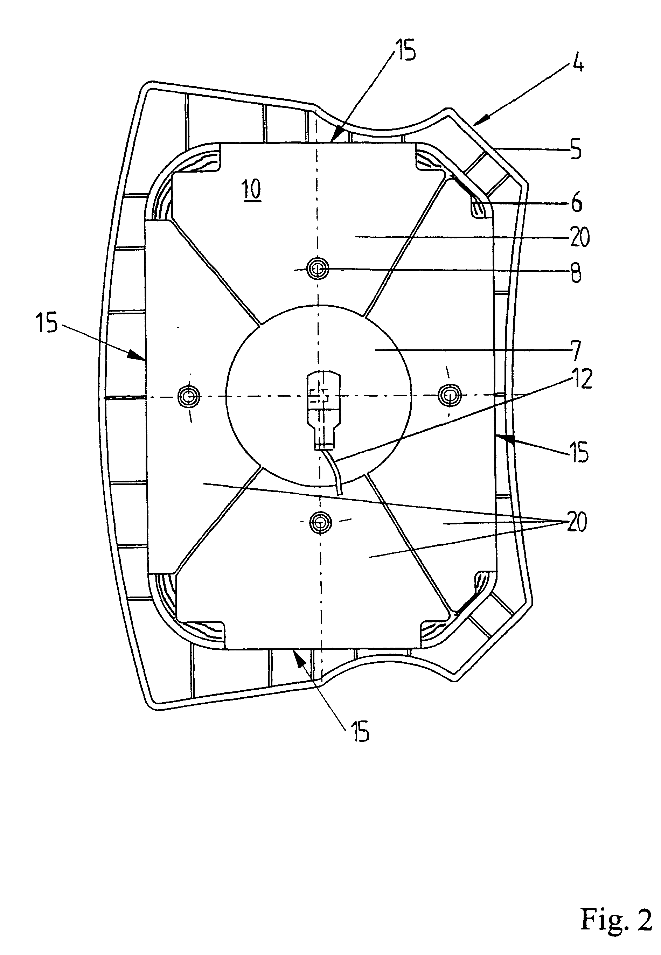

In der Figur 2 ist das Airbagmodul aus Figur 1 in einer Unteransicht dargestellt. Man erkennt, daß der den Generatorträger 10 bildende untere Bereich der Abdeckung 5 aus vier Laschen 20 besteht, die über Scharniere 15 klappbar an der Abdeckung 5 angelenkt sind. Weiterhin sind vier Gewindebolzen als Befestigungsmittel 8 erkennbar, die durch entsprechende Ausnehmungen in dem Generatoträger 10 ragen, sowie eine Aussparung 18 für das Zündkabel 12. Die Form der Abdeckung 5 ist an die Montage in ein Vierspeichenlenkrad angepaßt.

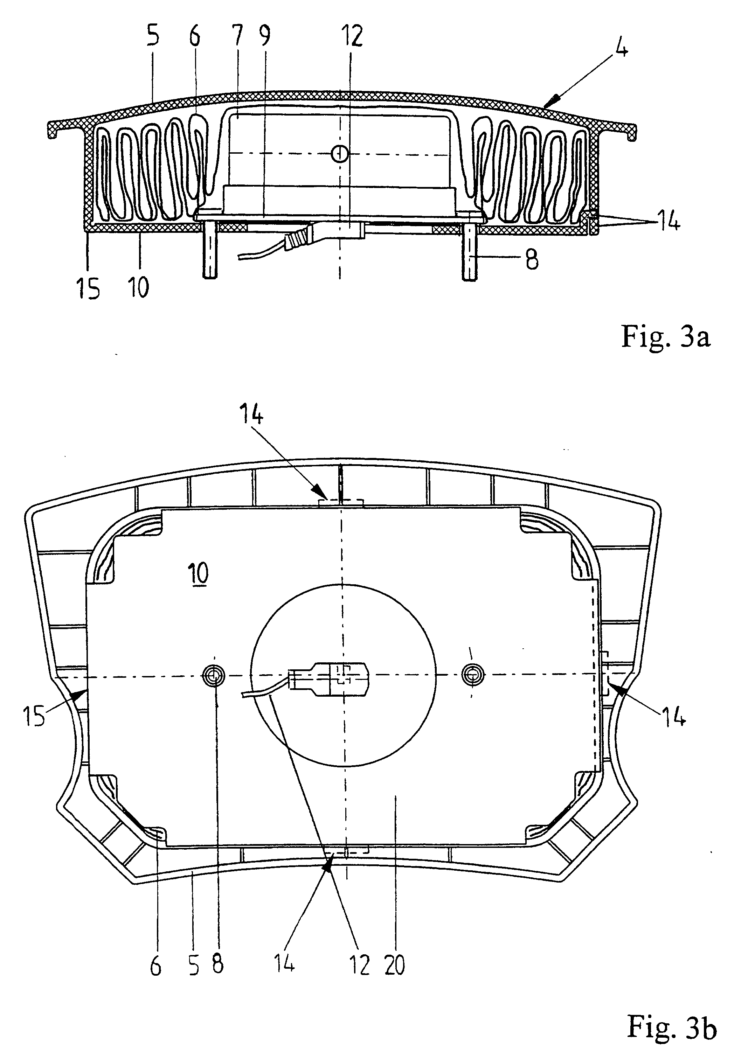

Die Figur 3a zeigt eine weitere Ausführungsform eines erfindungsgemäßen Airbagmoduls 4 im Querschnitt. Der Aufbau entspricht im wesentlichen demjenigen in Figur 1, wobei der den Generatorträger 10 bildende untere Bereich der Abdekkung 5 auf der einen Seite über ein Filmscharnier 15 angelenkt ist und auf der anderen Seite über Rastelemente 14 gesichert wird. Die endgültige Festlegung des Gasgenerators 7 an dem Gehäuse 5 erfolgt bei der Montage des Airbagmoduls 4 an einem (hier nicht dargestellten) Lenkrad.

In der Figur 3b ist das Airbagmodul 4 aus Figur 3a von unten gezeigt. Man erkennt, daß die Form der Abdeckung 5 zur Verwendung in einem Lenkrad angepaßt ist. Weiterhin ist der den Generatorträger 10 bildende untere Bereich der Abdeckung 5 erkennbar, der über das Filmscharnier 15 mit dieser verbunden ist.

Nachdem der Gassack 6 in die Abdeckung 5 gefaltet worden ist, wird der untere Bereich auf den Gasgenerator 7 (in Fig. 3b verdeckt) umgelegt und mit den Rastelementen 14 gesichert. Die als Gewindebolzen ausgebildeten Befestigungsmittel 8 ragen durch entsprechende Öffnungen in dem Generatoträger 10. Ebenso ist eine Ausnehmung für das Zündkabel 12 vorgesehen.

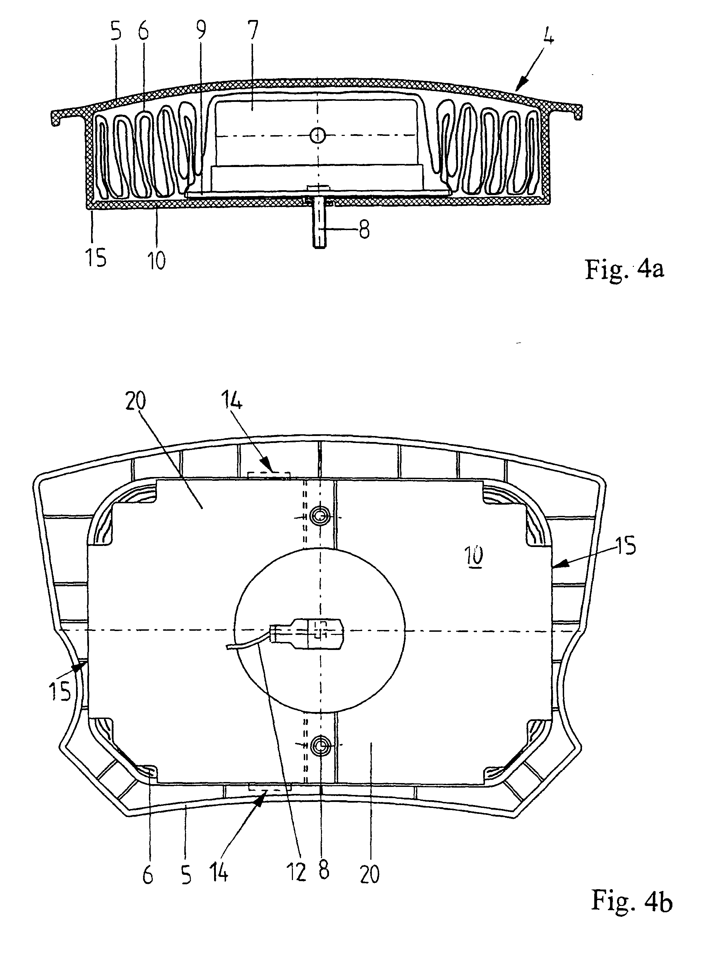

In den Figuren 4a und 4b ist eine weitere Ausführungsform eines erfindungsgemäßen Airbagmoduls 4 im Längsschnitt und in einer Unteransicht dargestellt. Hier wird den Generatorträger 10 bildende untere Bereich der Abdeckung 5 von zwei sich überlappenden Laschen 20 gebildet. Durch die Überlappung wird eine besonders sichere und dichte Festlegung des Gassackes 6 zwischen dem Gasgenerator 7 und dem unteren Bereich der Abdeckung 5 erreicht.

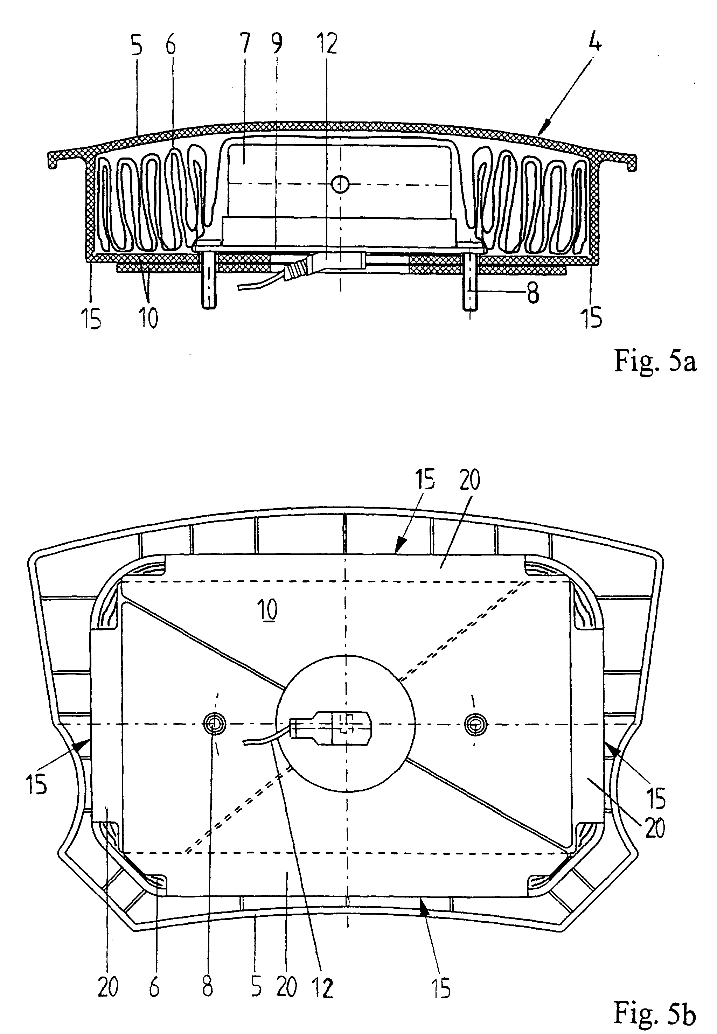

Die Figuren 5a und 5b zeigen eine weitere vorteilhafte Gestaltung des als Generatorträger 10 dienenden unteren Bereichs der Abdeckung 5 bei einem erfindungsgemäßen Airbagmodul 4. In dieser Auführungsform bilden vier vollständig überlappende, klappbare Laschen 20 den unteren Bereich, so daß eine Sicherung durch Rastelemente verzichtbar ist.

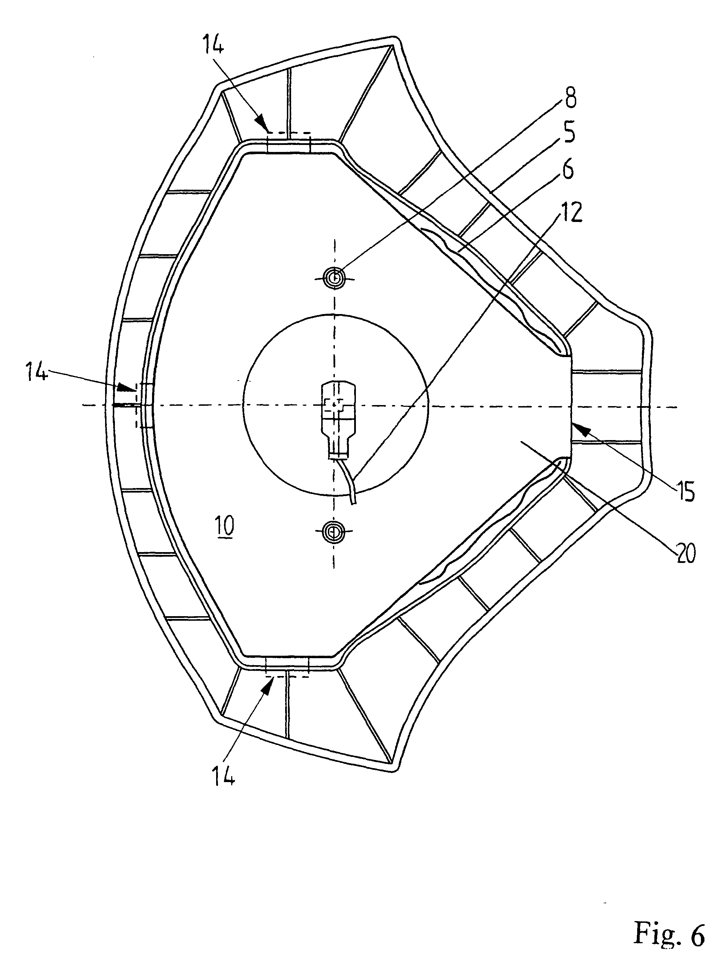

In Figur 6 ist ein Airbagmodul für ein Dreispeichenlenkrad in einer Unteransicht gezeigt. Der den Generatorträger 10 bildende untere Bereich der Abdeckung 5 ist in dieser Ausführungsform einteilig gestaltet, mittels einers Scharnieres 15 verschwenkbar und wird mit Rastelementen 14 gesichert.

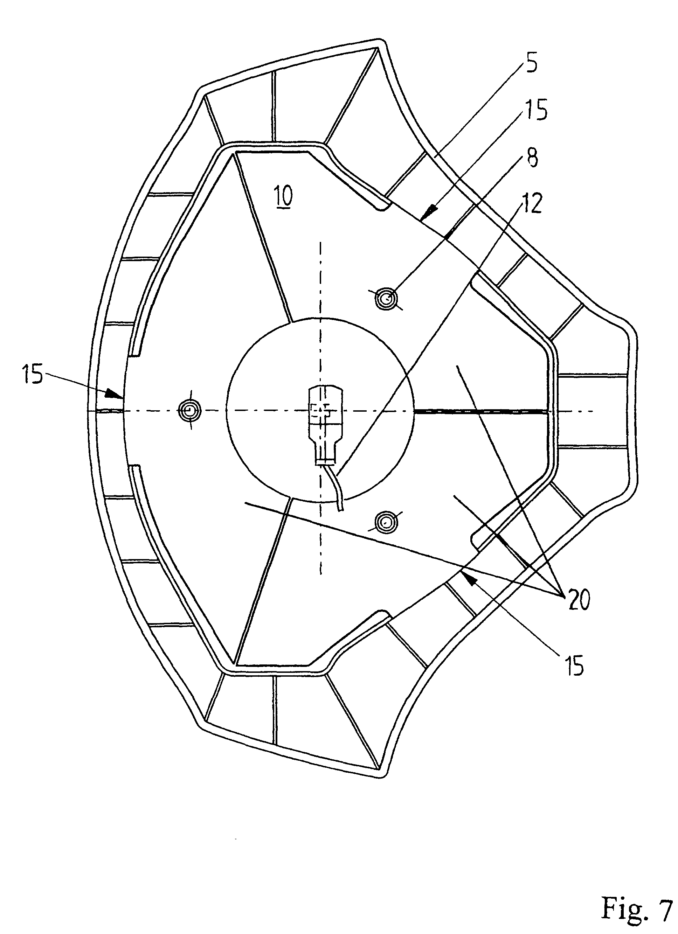

Figur 7 zeigt eine Unteransicht einer weiteren Ausführungsform eines Airbagmoduls für ein Dreispeichenlenkrad. Der untere Bereich 10 der Abdeckung wird von drei Laschen 20 gebildet, und es sind entsprechend drei Gewindebolzen 8 als Befestigungsmittel 8 vorgesehen.

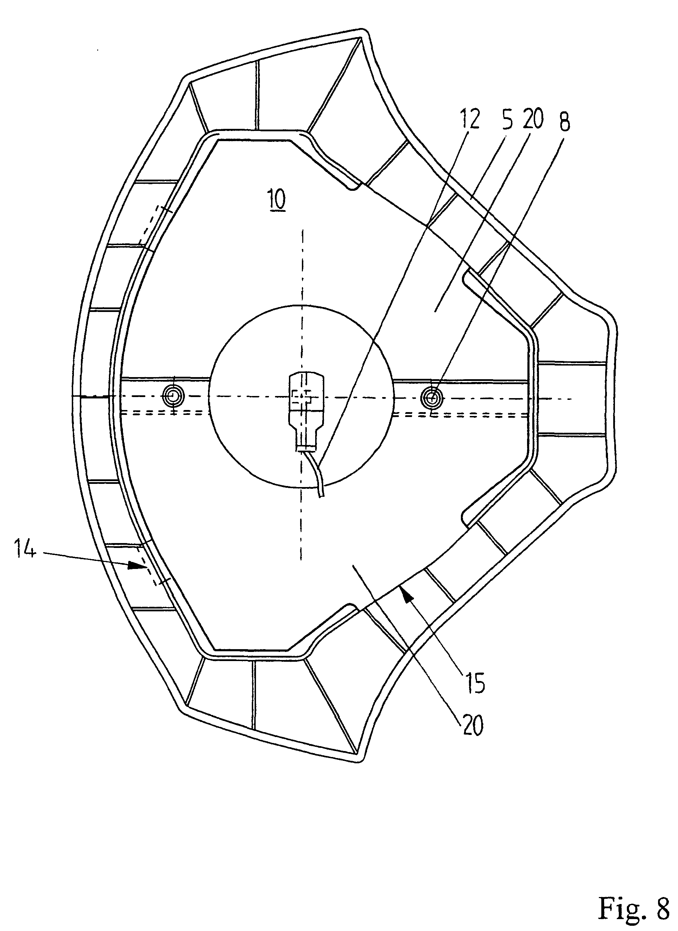

Figur 8 zeigt schließlich eine Ausführungsform eines erfindungsgemäßen Airbagmoduls für ein Dreispeichenlenkrad, bei der der Generatoträger 10 von zwei sich überlappenden Laschen 20 gebildet wird. Jede der Laschen 20 ist einstükkig mit der Abdeckung 5 ausgebildet und über ein Scharnier 15 an dieser angelenkt. Ferner werden beide Laschen 20 zur Sicherung mittels Rastelementen 14 an der Abdeckung 5 verrastet.

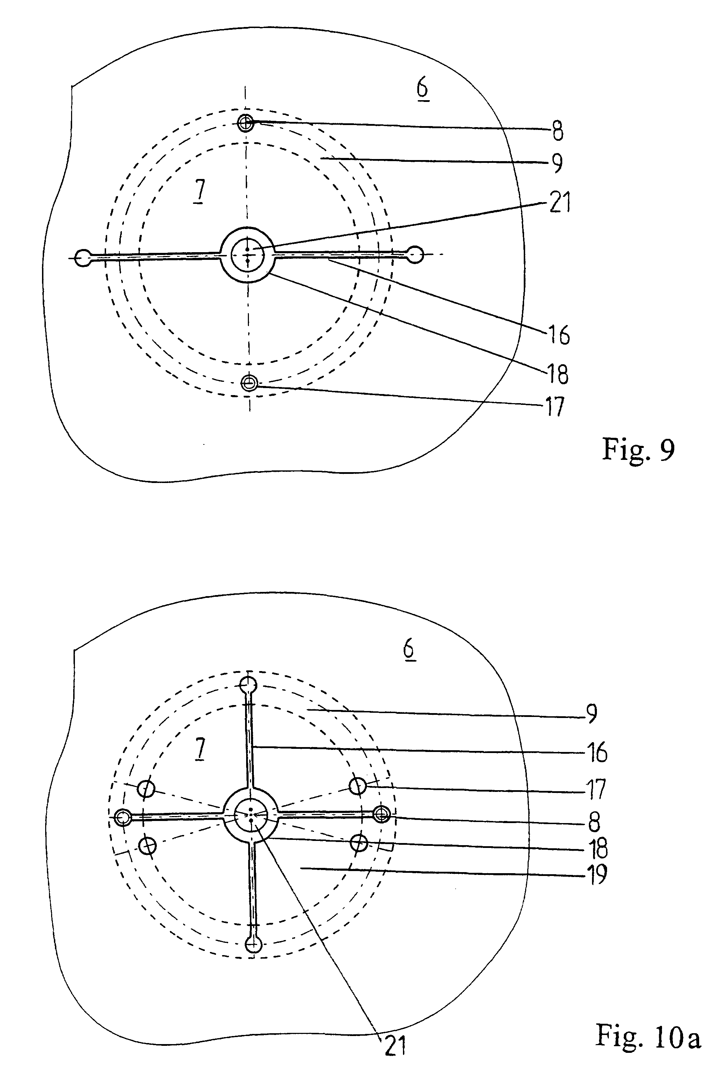

In Figur 9 ist ein Teil eines noch nicht gefalteten Gassackes 6 dargestellt, in den ein Gasgenerator 7 eingeführt ist. Der Gassack 6 weist einen Schlitz 16 zum Einführen des Gasgenerators 7 und Durchgänge 17 zum Einfädeln auf die Gewindebolzen 8 des Flansches 9 des Gasgenerators 7 auf. Die Durchgänge 17 haben vorzugsweise einen verstärkten Rand. Weiterhin ist eine Aussparung 18 zum Anschließen des Zündkabels 12 an den Anschluß 21 vorgesehen.

Die Figur 10a zeigt eine bevorzugte Ausführungsform des Gassackes 6. Es sind wiederum nur ein Teil des Gassackes 6 sowie der Gasgenerator 7 dargestellt. Der Gassack 6 weist einen kreuzförmigen Schlitz 16 zur Einführung des Gasgenerators 7 auf. Außerdem ist in jedem von dem Schlitz 16 gebildeten Feld 19 ein Durchgang 17 vorgesehen, in den ein Gewindebolzen 8 eingefädelt wird.

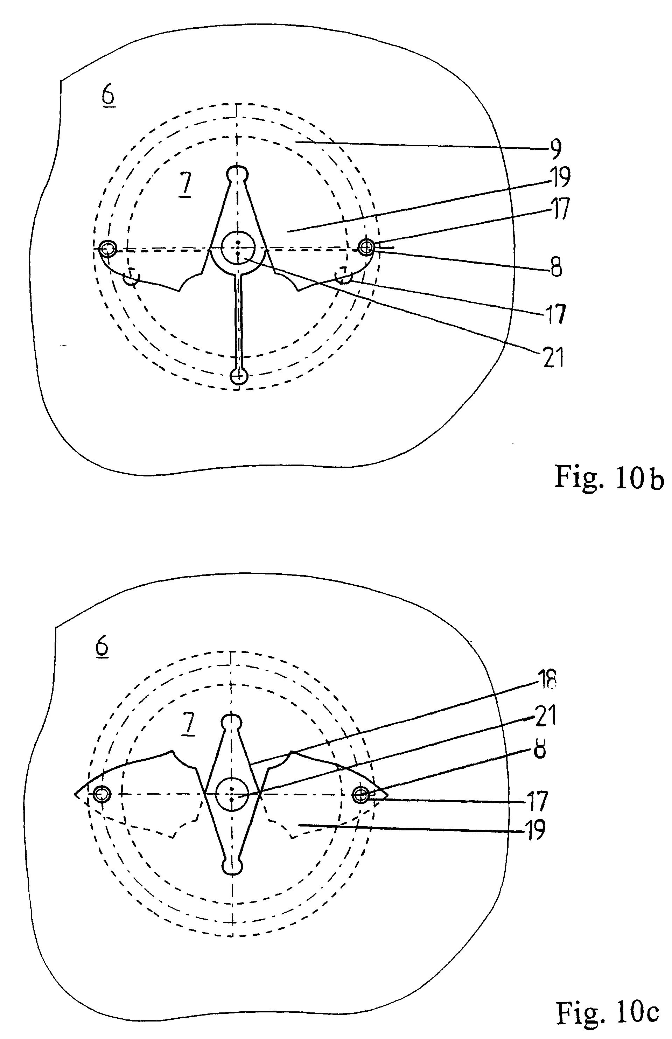

Wie in Figur 10b gezeigt werden nach dem Einführen des Gasgenerators 7 in den Gassack 6 zunächst zwei benachbarte Durchgänge 17 über jeweils einen Gewindebolzen 8 gefädelt, so daß das Gewebe das Gasackes 6 über die Lage des ursprünglichen Schlitzes 16 hinausragt. Anschließend werden die beiden anderen Durchgänge 17 wie in Figur 10c gezeigt ebenfalls über die Gewindebolzen 8 gefädelt. Damit wird einerseits der Gassack 6 an dem Gasgenerator 7 festgelegt und durch die Überlappung der Felder gedichtet und andererseits eine entsprechende Aussparung 18 für den Anschluß 21 des Zündkabels 12 geschaffen.

Dieses Anbindungsverfahren für den Gassack läßt sich nicht nur bei einem erfindungsgemäßen Airbagmodul vorteilhaft einsetzen, sondern eignet sich ganz allgemein zur Anbindung von Gassäcken an Gasgeneratoren. Es handelt sich um ein besonders einfaches und zugleich sicheres Verfahren, bei dem keine Halteringe oder andere Befestigungsvorrichtungen erforderlich sind. Einzige Voraussetzung sind entsprechende Gewindebolzen, Schrauben oder sonstige Stifte an dem Gasgenerator, über die die Öffnungen im Bereich des Schlitzes für den Gasgenerator gefädelt werden können.

### Bezugszeichenliste

- 1.: Lenkrad
- 2.: Lenkradkranz
- 3.: Lenkradnabe
- 4.: Airbagmodul
- 5.: Abdeckung
- 6.: Gassack
- 7.: Gasgenerator
- 8.: Befestigungsmittel
- 9.: Flansch
- 10.: Generatorträger
- 11.: Bohrungen
- 12.: Zündkabel
- 13.: Mutter
- 14.: Rastelemente
- 15.: Scharnier
- 16.: Öffnung
- 17.: Durchgang
- 18.: Aussparung
- 19.: Feld
- 20.: Lasche
- 21.: Anschluß für das Zündkabel

## Patentansprüche

1. Airbagmodul, insbesondere Fahrerairbagmodul, mit einem eine Abdeckung bildenden, einteiligen Gehäuse (5), in dem ein Gassack (6) und ein an einem Generatorträger (10) befestigter Gasgenerator (7) angeordnet sind,
**dadurch gekennzeichnet,**
**daß** der Generatorträger (10) als ein einstückiger Bestandteil des Gehäuses (5) ausgebildet und schwenkbar an dem Gehäuse (5) angelenkt ist.

2. Airbagmodul nach Anspruch 1, **dadurch gekennzeichnet, daß** der Gasgenerator (7) zumindest teilweise auf dem Generatorträger (10) aufliegt.

3. Airbagmodul nach Anspruch 1 oder 2, **dadurch gekennzeichnet, daß** der Generatorträger (10) über mindestens ein Scharnier (15), insbesondere Filmscharnier, an dem Gehäuse (5) angelenkt ist.

4. Airbagmodul nach einem der vorhergehenden Ansprüche, **dadurch gekennzeichnet, daß** der Generatorträger (10) durch mindestens eine aufklappbare Lasche (20) gebildet wird.

5. Airbagmodul nach einem der vorhergehenden Ansprüche, **dadurch gekennzeichnet, daß** das Gehäuse (5) aus Kunststoff besteht.

6. Airbagmodul nach Anspruch 5, **dadurch gekennzeichnet, daß** das Gehäuse (5) im Spritzgußverfahren hergestellt ist, wobei mindestens eine angespritzte Lasche (20) den Generatorträger (10) bildet.

7. Airbagmodul nach Anspruch 4 und 6, **dadurch gekennzeichnet,** däß der Generatorträger (10) durch mindestens zwei sich überlappende Laschen (20) gebildet wird.

8. Airbagmodul nach einem der Ansprüche 4 bis 7, **dadurch gekennzeichnet, daß** an den Laschen (20) Rastelemente (14) vorgesehen sind, über die die Laschen (20) an dem Gehäuse (5) festlegbar sind.

9. Airbagmodul nach einem der vorhergehenden Ansprüche, **dadurch gekennzeichnet, daß** der Gasgenerator (7) einen Flansch (9) zu seiner Festlegung an dem Gehäuse (5) aufweist.

10. Airbagmodul nach Anspruch 9, **dadurch gekennzeichnet, daß** an dem Flansch (9) Befestigungsmittel (8) vorgesehen sind, über die das Airbagmodul (4) mit einem Kraftfahrzeugteil verbindbar ist.

11. Airbagmodul nach Anspruch 10, **dadurch gekennzeichnet, daß** als Befestigungsmittel (8) Gewindebolzen vorgesehen sind.

12. Airbagmodul nach einem der vorhergehenden Ansprüche, **dadurch gekennzeichnet, daß** der Gassack (6) unmittelbar an dem Gasgenerator (7) festgelegt ist.

13. Airbagmodul nach Anspruch 12, **dadurch gekennzeichnet, daß** der Gassack (6) zwischen den Laschen (20), die den Generatorträger (10) bilden, und dem Gasgenerator (7) eingeklemmt ist.

14. Airbagmodul nach Anspruch 12, **dadurch gekennzeichnet, daß** der Gassack (6) eine Öffnung (16) aufweist, durch die der Gasgenerator (7) in den Gassack (6) einschiebbar ist.

15. Airbagmodul nach Anspruch 14, **dadurch gekennzeichnet, daß** die Öffnung (16) schlitzförmig, insbesondere kreuzschlitzförmig, ausgebildet ist.

16. Airbagmodul nach Anspruch 14, **dadurch gekennzeichnet, daß** die Öffnung (16) als sternförmiger Schlitz ausgebildet ist.

17. Airbagmodul nach einem der vorhergehenden Ansprüche, **dadurch gekennzeichnet, daß** der Gassack (6) im Bereich der Öffnung (16) Durchgänge (17) aufweist, über die er an den Befestigungsmitteln (8) festlegbar ist.

18. Airbagmodul nach einem der vorhergehenden Ansprüche, **dadurch gekennzeichnet, daß** der Gassack (6) eine schlitzförmige Öffnung (16) zum Einführen des Gasgenerators (7) aufweist, durch die mindestens zwei Felder (19) in dem Gassack (6) gebildet werden, und daß in den Feldern (19) Durchgänge (17) vorgesehen sind, die derart über von dem Gasgenerator (7) abstehende Befestigungsmittel (8) einfädelbar sind, daß die Felder (19) teilweise überlappen.

19. Airbagmodul nach Anspruch 18, **dadurch gekennzeichnet, daß** die Felder (19) in dem Gassack (6) durch das Überlappen eine Aussparung (18) für einen Anschluß (21) eines Zündkabels (12) freigeben.

20. Airbagmodul nach Anspruch 18 oder 19, **dadurch gekennzeichnet, daß** die schlitzförmige Öffnung (16) eine gerade Anzahl Felder (19) bildet.

21. Airbagmodul nach einem der Ansprüche 18 bis 20, **dadurch gekennzeichnet, daß** die Durchgänge (17) gestanzte Löcher sind.

22. Airbagmodul nach einem der Ansprüche 18 bis 21, **dadurch gekennzeichnet, daß** die Durchgänge (17) einen verstärkten Rand aufweisen.

23. Airbagmodul nach einem der Ansprüche 18 bis 22, **dadurch gekennzeichnet, daß** zwei Befestigungsmittel (8) vorgesehen sind und die Öffnung (16) kreuzschlitzförmig ist.

## Claims

1. Airbag module, in particular driver's airbag module, having a one-piece housing (5) which forms a covering and in which a gas bag (6) and a gas generator (7), which is fastened to a generator support (10), are arranged, **characterized in that** the generator support (10) is designed as an integral component of the housing (5) and is coupled pivotably to the housing (5).

2. Airbag module according to Claim 1, **characterized in that** at least part of the gas generator (7) rests on the generator support (10).

3. Airbag module according to Claim 1 or 2, **characterized in that** the generator support (10) is coupled to the housing (5) via at least one hinge (15), in particular film hinge.

4. Airbag module according to one of the preceding claims, **characterized in that** the generator support (10) is formed by at least one tab (20) which can open up.

5. Airbag module according to one of the preceding claims, **characterized in that** the housing (5) consists of plastic.

6. Airbag module according to Claim 5, **characterized in that** the housing (5) is produced by injection moulding, in which case at least one moulded-on tab (20) forms the generator support (10).

7. Airbag module according to Claims 4 and 6, **characterized in that** the generator support (10) is formed by at least two overlapping tabs (20).

8. Airbag module according to one of Claims 4 to 7, **characterized in that** latching elements (14) are provided on the tabs (20) and can be used to fix the tabs (20) to the housing (5).

9. Airbag module according to one of the preceding claims, **characterized in that** the gas generator (7) has a flange (9) for fixing it to the housing (5).

10. Airbag, module according to Claim 9, **characterized in that** fastening means (8) are provided on the flange (9) and can be used to connect the airbag module (4) to a motor-vehicle part.

11. Airbag module according to Claim 10, **characterized in that** threaded bolts are provided as fastening means (8).

12. Airbag module according to one of the preceding claims, **characterized in that** the gas bag (6) is fixed directly to the gas generator (7).

13. Airbag module according to Claim 12, **characterized in that** the gas bag (6) is jammed between the tabs (20), which form the generator support (10), and the gas generator (7).

14. Airbag module according to Claim 12, **characterized in that** the gas bag (6) has an opening (16) through which the gas generator (7) can be pushed into the gas bag (6).

15. Airbag module according to Claim 14, **characterized in that** the opening (16) is of slot-shaped design, in particular cross slot-shaped design.

16. Airbag module according to Claim 14, **characterized in that** the opening (16) is designed as a star-shaped slot.

17. Airbag module according to one of the preceding claims, **characterized in that** in the region of the opening (16) the gas bag (6) has passages (17) which can be used to fix it to the fastening means (8).

18. Airbag module according to one of the preceding claims, **characterized in that** the gas bag (6) has a slot-shaped opening (16) for the introduction of the gas generator (7), the said opening causing the formation of at least two zones (19) in the gas bag (6), and **in that** passages (17) are provided in the zones (19), which passages can be threaded over fastening means (8) protruding from the gas generator (7) in such a manner that the zones (19) partially overlap.

19. Airbag module according to Claim 18, **characterized in that** because of the overlapping the zones (19) in the gas bag (6) open up a cutout (18) for connection (21) of an ignition cable (12).

20. Airbag module according to Claim 18 or 19, **characterized in that** the slot-shaped opening (16) forms an even number of zones (19).

21. Airbag module according to one of Claims 18 to 20, **characterized in that** the passages (17) are punched holes.

22. Airbag module according to one of Claims 18 to 21, **characterized in that** the passages (17) have a reinforced edge.

23. Airbag module according to one of Claims 18 to 22, **characterized in that** two fastening means (8) are provided and the opening (16) is cross slot-shaped.

## Revendications

1. Module d'airbag, en particulier module d'airbag pour conducteur, comportant un boîtier (5) d'un seul tenant formant un recouvrement, dans lequel sont agencés un sac à gaz (6) et un générateur de gaz (7) fixé sur un porte-générateur (10),
**caractérisé en ce que** le porte-générateur (10) est réalisé sous forme de composant d'une seule pièce du boîtier (5) et articulé avec faculté de pivotement sur le boîtier (5).

2. Module d'airbag selon la revendication 1, **caractérisé en ce que** le générateur de gaz (7) repose au moins partiellement sur le porte-générateur (10).

3. Module d'airbag selon la revendication 1 ou 2, **caractérisé en ce que** le porte-générateur (10) est articulé sur le boîtier (5) par au moins une charnière (15), en particulier par une charnière en film.

4. Module d'airbag selon l'une des revendications précédentes, **caractérisé en ce que** le porte-générateur (10) est formé par au moins une patte rabattable (20).

5. Module d'airbag selon l'une des revendications précédentes, **caractérisé en ce que** le boîtier (5) est constitué en matière plastique.

6. Module d'airbag selon la revendication 5, **caractérisé en ce que** le boîtier (5) est fabriqué par un procédé de coulée par injection, au moins une patte (20) rapportée par injection formant le porte-générateur (10).

7. Module d'airbag selon les revendications 4 et 6, **caractérisé en ce que** le porte-générateur (10) est formé par au moins deux pattes (20) qui se chevauchent.

8. Module d'airbag selon l'une des revendications 4 à 7, **caractérisé en ce que** des éléments d'enclenchement (14) sont prévus sur les pattes (20), au moyen desquels les pattes (20) peuvent être immobilisées sur le boîtier (5).

9. Module d'airbag selon l'une des revendications précédentes, **caractérisé en ce que** le générateur de gaz (7) présente une bride (9) pour son immobilisation sur le boîtier (5).

10. Module d'airbag selon la revendication 9, **caractérisé en ce que** des moyens de fixation (8) sont prévus sur la bride (9), par lesquels le module d'airbag (4) est susceptible d'être relié à un élément du véhicule automobile.

11. Module d'airbag selon la revendication 10, **caractérisé en ce que** des goujons filetés sont prévus à titre de moyens de fixation (8).

12. Module d'airbag selon l'une des revendications précédentes, **caractérisé en ce que** le sac à gaz (6) est immobilisé directement sur le générateur de gaz (7).

13. Module d'airbag selon la revendication 12, **caractérisé en ce que** le sac à gaz (6) est serré entre les pattes (20), formant le porte-générateur (10), et le générateur de gaz (7).

14. Module d'airbag selon la revendication 12, **caractérisé en ce que** le sac à gaz (6) présente une ouverture (16) à travers laquelle le générateur de gaz (7) peut venir s'introduire dans le sac à gaz (6).

15. Module d'airbag selon la revendication 14, **caractérisé en ce que** l'ouverture (16) est ménagée en forme de fente, en particulier en forme de fente en croix.

16. Module d'airbag selon la revendication 14, **caractérisé en ce que** l'ouverture (16) est ménagée en forme de fente en étoile.

17. Module d'airbag selon l'une des revendications précédentes, **caractérisé en ce que** le sac à gaz (6) présente des passages (17) dans la zone de l'ouverture (16), à travers lesquels il est susceptible d'être immobilisé sur les moyens de fixation (8).

18. Module d'airbag selon l'une des revendications précédentes, **caractérisé en ce que** le sac à gaz (6) présente une ouverture (16) en forme de fente pour introduire le générateur de gaz (7), par laquelle se forment au moins deux champs (19) dans le sac à gaz (6), et **en ce que** des passages (17) sont prévus dans les champs (19), à travers lesquels des moyens de fixation (8), faisant saillie du générateur de gaz (7), peuvent être enfilés de telle sorte que les champs (19) se chevauchent partiellement.

19. Module d'airbag selon la revendication 18, **caractérisé en ce que** par chevauchement, les champs (19) dans le sac à gaz (6) dégagent une échancrure (18) pour un raccord (21) d'un câble d'amorçage (12).

20. Module d'airbag selon la revendication 18 ou 19, **caractérisé en ce que** l'ouverture (16) en forme de fente forme un nombre pair de champs (19).

21. Module d'airbag selon l'une des revendications 18 à 20, **caractérisé en ce que** les passages (17) sont des trous poinçonnés.

22. Module d'airbag selon l'une des revendications 18 à 21, **caractérisé en ce que** les passages (17) présentent un bord renforcé.

23. Module d'airbag selon l'une des revendications 18 à 22, **caractérisé en ce qu'**il est prévu deux moyens de fixation (8) et l'ouverture (16) est en forme de fente en croix.
